# EUROPÄISCHE PATENTSCHRIFT

(11) **EP 0 315 587 B1**
(45) Veröffentlichungstag und Bekanntmachung des Hinweises auf die Patenterteilung: **14.04.1993**
(21) Anmeldenummer: 88810687.9
(22) Anmeldetag: 06.10.1988
(51) Int. Cl.: B23B 31/02

(54) **Aufnahmevorrichtung**
Reception device
Dispositif de réception

(30) Priorität: 04.11.1987 DE 3737355
(43) Veröffentlichungstag der Anmeldung: 10.05.1989
(73) Patentinhaber: HILTI Aktiengesellschaft, 9494 Schaan (LI)
(72) Erfinder: Nutt, Hubert, FL-9493 Mauren (LI)
(74) Vertreter: Wildi, Roland

(56) Entgegenhaltungen:
- DE-A- 2 906 620
- DE-A- 3 533 396

## Beschreibung

Die Erfindung betrifft eine Aufnahmevorrichtung mit Aufnahmegewinde für mit Gewinde versehene Bohrwerkzeuge, mit einem die Aufschraublänge der Werkzeuge begrenzenden Anschlag, der als von einem hydraulischen Medium beaufschlagter Kolben ausgebildet ist, und für das hydraulische Medium ein Aufnahmeraum vorgesehen ist, der über eine Verbindungsleitung mit einem Ausgleichsraum verbunden ist und dessen Volumen mittels eines damit in Verbindung stehenden, von aussen manuell betätigbaren Steuerelementes veränderbar ist.

Bei Vorrichtungen, wo über Gewindeverbindungen Drehmomente übertragen werden, tritt grundsätzlich das Problem auf, dass diese Verbindungen schlecht lösbar sind. Insbesondere ist diese Problematik bei Aufnahmevorrichtungen, die dem Eindrehen von Gewindestangen oder der Aufnahme von Bohrwerkzeugen dienen, bekannt. Während für das Eindrehen von Gewindestangen, die ein Aussengewinde aufweisen, eine befriedigend funktionierende Aufnahmevorrichtung bekannt ist, steht eine solche für Teile mit einem Innengewinde, seien es Gewindestangen oder Bohrwerkzeuge, nicht zur Verfügung.

Eine Aufnahmevorrichtung für Gewindestangen mit Aussengewinde ist beispielsweise aus der DE-A1-35 33 396 bekannt, bei welcher die in einem Aufnahmeteil über ihr Gewinde aufgenommene Gewindestange gegen einen Kolben aufläuft, welcher von einem hydraulischen Medium abgestützt ist. Der beim Eindrehen der Gewindestange sich über den Kolben im hydraulischen Medium aufbauende Druck kann durch Zuschalten eines Ausgleichsraumes mittels eines Steuerelementes abgebaut werden, so dass das zwischen der Stirnfläche der Gewindestange und dem Kolben entstehende Reibmoment aufgehoben und damit die Ankerstange problemlos aus dem Aufnahmeteil herausgeschraubt werden kann.

Nachdem bei dieser bekannten Aufnahmevorrichtung Kolben, Aufnahmeraum für das hydraulische Medium und Steuerelement zentral angeordnet sind, bietet sich nur die Möglichkeit der Anordnung einer zentrischen Aufnahme für die Gewindestangen. Möglichkeiten zur Aufnahme von Teilen mit einer ringförmigen als Anschlagfläche dienenden Stirnfläche, wie Gewindestangen oder Bohrwerkzeuge, weist diese bekannte Aufnahmevorrichtung nicht auf.

Der Erfindung liegt daher die Aufgabe zugrunde, eine Vorrichtung der vorgenannten Art zu schaffen, welche sich zur Aufnahme von Teilen mit Innengewinde, wie Gewindestangen und Bohrwerkzeuge, eignet.

Erfindungsgemäss wird die Aufgabe dadurch gelöst, dass das Aufnahmegewinde als Aussengewinde auf einem Spindelkörper angeordnet ist, der Kolben sowie der Aufnahmeraum den Spindelkörper ringförmig umgibt und das Steuerelement tangential zum Spindelkörper angeordnet ist.

Auf das Aussengewinde des beispielsweise direkt mit einem Antriebsgerät verbindbaren Spindelkörpers kann ein Bohrwerkzeug mit Innengewinde aufgeschraubt werden, wobei sich die in Aufschraubrichtung weisende Stirnfläche des Werkzeugs gegen die freie kreisringförmige Stirnseite des Kolbens anlegt. Der Spindelkörper kann mit einer durchgehenden Axialbohrung versehen sein, über welche Spülflüssigkeit in eine allenfalls vorhandene, zentrale Spülbohrung des Werkzeugs einleitbar ist. Insbesondere Bohrwerkzeuge mit grossem Arbeitsdurchmesser sind rohrförmig ausgebildet und so mit einer zentralen Spülbohrung versehen.

Beim Festspannen des Werkzeugs drückt dieses axial gegen den Kolben, wodurch auch das beispielsweise aus Oel oder einem hydraulischen Elastomer bestehende hydraulische Medium im Aufnahmeraum entsprechend erhöhtem Druck ausgesetzt wird. Der Kolben bildet mit der dem Werkzeug abgewandten Stirnseite ein Wandungsteil des Aufnahmeraumes. Für das Lösen der Verspannung des Werkzeugs wird der Druck des hydraulischen Mediums abgebaut, was durch manuelles Betätigen des Steuerelementes von aussen erfolgt.

Das Steuerelement durchsetzt vorzugsweise die Verbindungsleitung zwischen dem Aufnahmeraum und dem Ausgleichsraum. Durch das Betätigen des Steuerelementes kann sich das Medium in den Ausgleichsraum hinein entspannen. Das Zurückführen des Steuerelementes in Schliessstellung kann automatisch, beispielsweise durch Federkraft, erfolgen.

Mit Vorteil ist das Steuerelement als Schieber ausgebildet, welcher sich sowohl durch konstruktive Einfachheit in Ausbildung und Anordnung als auch durch Störungsunanfälligkeit auszeichnet.

Vorzugsweise sind auf der dem Aufnahmeraum abgewandten Seite Anschlagmittel für den Kolben vorgesehen, die beispielsweise mit dem Spindelkörper in Verbindung stehen können. In Ruhestellung legt sich der Kolben gegen die Anschlagmittel, wodurch einerseits ein definiertes Volumen des Aufnahmeraumes gewährleistet ist und andererseits der Kolben vor dem Entfallen gesichert wird. Das Anschlagmittel kann beispielsweise als Stützring ausgebildet sein und in einem den Kolben umgebenden Käfig festsitzen.

Die Erfindung wird nachstehend anhand von Zeichnungen, die Ausführungsbeispiele wiedergeben, näher erläutert. Es zeigen:
- Fig. 1: eine Aufnahmevorrichtung im Längsschnitt, in Spannstellung;
- Fig. 2: einen Schnitt II-II durch die Aufnahmevorrichtung nach Fig. 1.

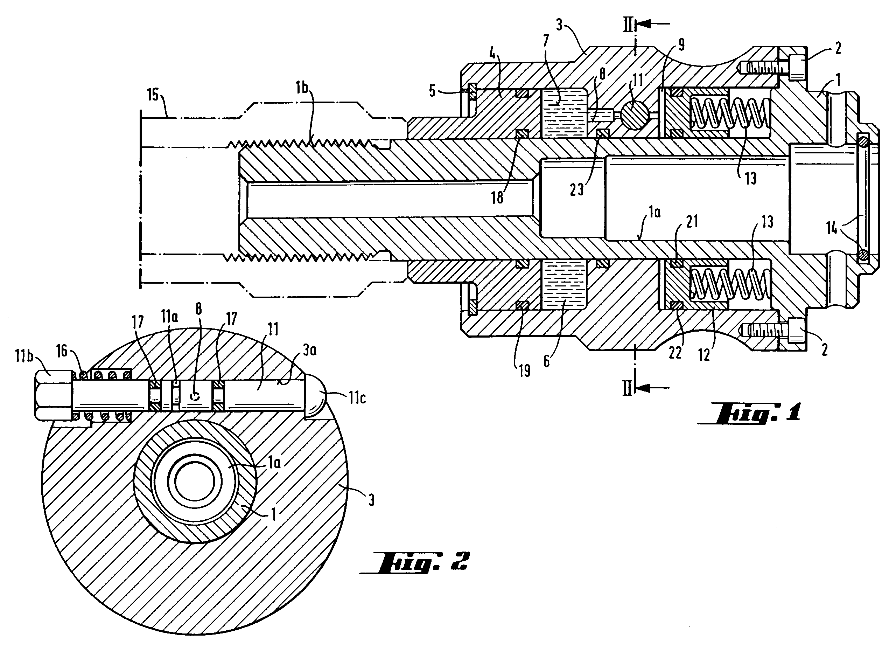

Die Aufnahmevorrichtung nach Fig. 1 besteht im wesentlichen aus einem Spindelkörper 1, mit dem durch Schrauben 2 ein Mantelteil 3 fest verbunden ist. Den Spindelkörper 1 umgibt ringförmig ein Kolben 4, der aussenseitig im Mantelteil 3 gelagert ist. Ein als Stützring 5 ausgebildetes Anschlagmittel für den Kolben 4 sitzt im Mantelteil 3. Ein ringförmiger, den Spindelkörper 1 umgebender Aufnahmeraum 6 ist mit hydraulischem Medium 7 gefüllt. Abgewandt vom Kolben 4 mündet in den Aufnahmeraum 6 eine Verbindungsleitung 8, die zu einem Ausgleichsraum 9 führt. Die Verbindungsleitung 8 ist von einem manuell von aussen betätigbaren Schieber 11 durchquert. Der Ausgleichsraum 9 weist ein variables Volumen auf, indem eine Wandung desselben von einem wiederum den Spindelkörper 1 ringförmig umgebenden Druckkolben 12 gebildet ist. Sich am Spindelkörper 1 abstützende Druckfedern 13 treiben den Druckkolben 12 zur Verkleinerung des Ausgleichsraumes 9 gegen den Aufnahmeraum 6.

Der Spindelkörper 1 ist von einer im Durchmesser gestuft ausgebildeten Axialbohrung 1a durchsetzt. Der im Durchmesser vergrösserte Abschnitt der Axialbohrung 1a dient dem Anschluss an ein hier nicht dargestelltes Aufnahmeteil einer Antriebsmaschine. Mittels eines Schnappringes 14 wird eine dichtende axiale Halterung gegenüber der Antriebsmaschine geschaffen. Der im Durchmesser verjüngte Abschnitt der Axialbohrung 1a dient der Durchleitung von Spülflüssigkeit zu einem beispielsweise hohl ausgebildeten, andetungsweise dargestellten Bohrwerkzeug 15. Letzteres ist auf ein Aussengewinde 1b des Spindelkörpers 1 aufgeschraubt. Der Schieber 11 ist im wesentlichen als zylindrischer Stab ausgebildet und durchsetzt, wie die Fig. 2 verdeutlicht, das Mantelteil 3 in einer Bohrung 3a tangential zum Spindelkörper 1. Eine Ringnut 11a am Schieber 11 ist durch Betätigen des Schiebers 11 gegen die Kraft einer Zylinderfeder 16 in Deckung mit der Verbindungsleitung 8 bringbar. Die Zylinderfeder 16 stützt sich einerseits am Mantelteil 3 und andererseits an einem als Betätigungsknopf dienenden Kopf 11b des Schiebers 11 ab. Am dem Kopf 11b gegenüberliegenden Ende des Schiebers 11 ist eine Erweiterung 11c vorgesehen, welche sich in Ausgangsstellung des Schiebers 11 am Mantelteil 3 abstützt. Auf dem Schieber 11 sitzende Dichtringe 17 verhindern ein Austreten von flüssigem Medium über die Bohrung 3a nach aussen. Auch der Kolben 4 verfügt über Dichtringe 18, 19, wie auch der Druckkolben 12 Dichtringe 21, 22 trägt. Ein weiterer Dichtring 23 ist zwischen dem Mantelteil 3 und dem Spindelkörper 1 vorgesehen.

Das Bohrwerkzeug 15 ist auf den Spindelkörper 1 aufgeschraubt und stirnseitig gegen den Kolben 4 gespannt. Letzterer stützt sich dabei an dem im Aufnahmeraum 6 gefangenen hydraulischen Medium 7 axial ab. Das Medium 7 wird so erhöhtem Druck ausgesetzt, wobei sich dieser Druck im Arbeitseinsatz zufolge Nachspannens des Bohrwerkzeugs 15 noch erhöhen kann.

Zum Lösen des Bohrwerkzeugs 15 muss die Verspannung aufgehoben werden. Hierzu wird der Schieber 11 manuell verschoben, so dass die Ringnut 11a in den Bereich der Verbindungsleitung 8 gelangt. Der erhöhte Druck des Mediums 7 kann sich somit durch teilweises Ueberströmen in den Ausgleichsraum 9 abbauen. Die Druckfedern 13 stellen sicher, dass nach dem Lösen des Werkzeugs 15 durch Druckabgabe an das Medium 7 der Kolben 4 in Anlage am Stützring 5 gehalten wird. Mit dieser Aufnahmevorrichtung ist es also möglich, ohne Zuhilfenahme von Hilfswerkzeugen und ohne nennenswerten Kraftaufwand Werkzeuge 15 mit grossem Arbeitsdurchmesser und Spülbohrung aus der Verspannung zu lösen. Der Schieber 11 wird von der Zylinderfeder 16 automatisch wieder in Schliessstellung gebracht.

## Patentansprüche

1. Aufnahmevorrichtung mit Aufnahmegewinde für mit Gewinde versehene Bohrwerkzeuge (15), mit einem die Aufschraublänge der Werkzeuge (15) begrenzenden Anschlag, der als von einem hydraulischen Medium (7) beaufschlagter Kolben (4) ausgebildet ist, und für das hydraulische Medium (7) ein Aufnahmeraum (6) vorgesehen ist, der über eine Verbindungsleitung (8) mit einem Ausgleichsraum (9) verbunden ist und dessen Volumen mittels eines von aussen manuell betätigbaren Steuerelementes veränderbar ist, **dadurch gekennzeichnet**, dass das Aufnahmegewinde des Werkzeughalters als Aussengewinde (1b) auf einem Spindelkörper (1) angeordnet ist, der Kolben (4) sowie der Aufnahmeraum (6) den Spindelkörper (1) ringförmig umgibt und das Steuerelement (11) tangential zum Spindelkörper (1) angeordnet ist.

2. Aufnahmevorrichtung nach Anspruch 1, dadurch gekennzeichnet, dass das Steuerelement (11) die Verbindungsleitung (8) zwischen dem Aufnahmeraum (6) und dem Ausgleichsraum (9) durchsetzt.

3. Aufnahmevorrichtung nach Anspruch 1 oder 2, dadurch gekennzeichnet, dass das Steuerelement als Schieber (11) ausgebildet ist.

4. Aufnahmevorrichtung nach einem der Ansprüche 1 bis 3, dadurch gekennzeichnet, dass auf der dem Aufnahmeraum (6) abgewandten Seite Anschlagmittel (5) für den Kolben (4) vorgesehen sind.

## Claims

1. Tool chuck with receiving thread for threaded drilling tools (15) comprising a stop, which defines the screw-on length of a tool (15) and which is arranged as a piston (4) which is loaded by a hydraulic medium (7), and with provision of a receiving chamber (6) for the hydraulic medium (7), which chamber is connected via a connecting pipe (8) to an equalizing chamber (9) and the volume of which is adjustable by means of an externally manually operated control element, characterised in that the receiving thread of the tool chuck is arranged as an external thread (1b) on a spindle body (1), that the piston (4) and the receiving chamber (6) circularly surround the spindle body (1), and that the control element (11) is arranged tangentially to the spindle body (1).

2. Tool chuck according to claim 1, characterised in that the control element (11) passes through the connecting pipe (8) between receiving chamber (6) and equalizing chamber (9).

3. Tool chuck according to claim 1 or 2, characterised in that the control element is arranged as a slide (11).

4. Tool chuck according to one of claims 1 to 3, characterised in that stops (5) for the piston (4) are provided it the side facing away from the receiving chamber (6).

## Revendications

1. Dispositif de réception à filetage de réception destiné à des outils de perçage (15) munis d'un filetage, comprenant une butée limitant la longueur de vissage des outils (15), qui est constituée sous forme d'un piston (4) soumis à la sollicitation d'un fluide hydraulique (7), et comprenant un espace de réception (6) pour le fluide hydraulique (7) qui est relié par l'intermédiaire d'une ligne de liaison (8) à un espace d'équilibrage (9) et dont le volume peut être modifié au moyen d'un élément de commande pouvant être actionné manuellement de l'extérieur, caractérisé en ce que le filetage de réception du porte-outil est constitué sous forme d'un filetage externe (1b) sur un corps de broche (1), le piston (4) ainsi que l'espace de réception (6) entourant le corps de broche (1) sous une forme annulaire et l'élément de commande (11) étant disposé tangentiellement par rapport au corps de broche (1).

2. Dispositif selon la revendication 1, caractérisé en ce que l'élément de commande (11) traverse la ligne de liaison (8) entre l'espace de réception (6) et l'espace d'équilibrage (9).

3. Dispositif selon la revendication 1 ou 2, caractérisé en ce que l'élément de commande est constitué sous forme d'un coulisseau (11).

4. Dispositif selon l'une quelconque des revendications 1 à 3, caractérisé en ce que sont prévus sur le côté qui est à l'opposé de l'espace de réception (6) des moyens de butée (5) destinés au piston (4).
